# EUROPÄISCHE PATENTSCHRIFT

(11) **EP 1 198 854 B1**
(45) Veröffentlichungstag und Bekanntmachung des Hinweises auf die Patenterteilung: **30.07.2003**
(21) Anmeldenummer: 00935113.1
(22) Anmeldetag: 24.05.2000
(51) Int. Cl.: H01M 2/16, H01M 4/02, H01M 4/24

(54) **ELEKTRODENEINHEIT FÜR WIEDERAUFLADBARE ELEKTROCHEMISCHE ZELLEN**
ELECTRODE UNIT FOR RECHARGEABLE ELECTROCHEMICAL CELLS
DISPOSITIF D'ELECTRODES POUR ELEMENTS ELECTROCHIMIQUES RECHARGEABLES

(30) Priorität: 26.05.1999 DE 19924137
(43) Veröffentlichungstag der Anmeldung: 24.04.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: BERGER, Thomas, D-76327 Pfinztal (DE); FUCHS, Birgit, D-76227 Karlsruhe (DE); MAYER, Angela, D-72555 Metzingen (DE)
(86) Internationale Anmeldenummer: EP0004733
(87) Internationale Veröffentlichungsnummer: WO00074156

(56) Entgegenhaltungen:
- EP-A- 0 766 326
- DE-A- 19 708 209
- US-A- 4 396 689

## Beschreibung

Die Erfindung betrifft eine Elektrodeneinheit für wiederaufladbare elektrochemische Zellen, wie Akkumulatorzellen, die ihre Energiespeichereigenschaften aus der Abscheidung eines Elements als Metall oder Legierung beziehen, sowie eine mit mindestens einer solchen Elektrodeneinheit ausgestattete wiederaufladbare elektrochemische Zelle.

Unter elektrochemischen Zellen versteht man Stromzellen, die zu einer Umwandlung von chemischer in elektrische Energie in der Lage sind. Ist eine solche Umwandlung umkehrbar bzw. ist eine solche elektrochemische Zelle nach der Entladung durch einen dem Entladungsstrom entgegengesetzt gerichteten Strom wieder aufladbar, so wird diese als Akkumulatorzelle bezeichnet.

Wiederaufladbare elektrochemische Zellen (Akkumulatorzellen), die ihre Energiespeichereigenschaften aus der Abscheidung eines Elements als Metall oder Legierung beziehen, unterscheiden sich von herkömmlichen Akkumulatorzellen dahingehend, daß die negative, elektrochemische Energie speichernde Masse beim Aufladen der Zelle auf der negativen Elektrode abgeschieden wird. Hingegen wird bei herkömmlichen Zellen, z. B. Ni/Cd- oder Pb/PbO₂-Zellen, in der negativen Elektrode eine Substanz vorgelegt, die beim Aufladen eine chemische Umwandlung erfährt, somit in einen höher energetischen Zustand versetzt wird und dadurch Energie speichert.

Das Prinzip einer wiederaufladbaren elektrochemischen Zelle, die ihre Energiespeichereigenschaften aus der Abscheidung eines Elements als Metall oder Legierung bezieht, ist nachfolgend anhand einer LiCoO₂-Zelle beispielhaft erläutert.

Die wiederaufladbare elektrochemische Zelle wird im entladenen Zustand zusammengebaut und besteht zu diesem Zeitpunkt aus einer beim Laden positiven Elektrode, die als elektrochemisch aktives Interkalationsmaterial LiCoO₂ enthält. Das gesamte Lithium befindet sich in der positiven Elektrode. Die beim Laden negative Elektrode besteht zunächst aus einem Stromkollektor mit einem Ableiter, der z. B. aus einem Nickelblech oder einem anderen elektronenleitenden Material bestehen kann. Die positive und die negative Elektrode sind durch einen Separator getrennt. Sowohl das durchgängige Porensystem des Separators als auch alle verbleibenden Räume zwischen den LiCoO₂-Kristalliten und dem Stromkollektor der negativen Elektrode sind mit einem Li-Ionen leitenden Elektrolyten gefüllt. Beim Ladevorgang wird ein Teil der CO³⁺-Ionen im LiCoO₂ zu Co⁴⁺-Ionen oxidiert, daß heißt, es werden Elektronen an den Stromkollektor der positiven Elektrode abgegeben. Diese werden durch einen äußeren Elektronenleiter (Ladegerät) zur negativen Elektrode transportiert. Gleichzeitig werden zum Ladungsausgleich in den LiCoO₂-Kristalliten Li⁺-Ionen deinterkaliert, das heißt die Lithiumionen verlassen das Kristallgitter und wandern durch den Elektrolyten zur Seite der negativen Elektrode. Dort scheiden sie sich unter Aufnahme jeweils eines Elektrons metallisch auf dem Stromkollektor ab. Alternativ kann dieser Vorgang unter Legierungsbildung vonstatten gehen, wenn der Stromkollektor aus einem legierungsbildenden Material besteht'. In beiden Fällen, sowohl bei der metallischen Abscheidung als auch bei der Legierungsbildung, tritt auf der Seite der negativen Elektrode ein großer Volumenzuwachs auf. Auf der Seite der positiven Elektrode erfolgt durch die'Auslagerung (Deinterkalation) der Lithiumionen ebenfalls eine Volumenzunahme.

Die Terminologie bei der Nutzung elektrischer Energie bezieht sich auf den "Nutzvorgang", bei einer Batterie oder einem Akkumulator also auf den Entladevorgang. Die positive Elektrode wird dabei als Kathode, die negative als Anode bezeichnet. Vorstehend wurde und in folgenden wird allerdings im wesentlichen der Ladevorgang betrachtet, bei dem Oxidation bzw. Reduktion der Elektroden gegenüber dem Entladevorgang vertauscht sind. Beim Ladevorgang ist also die Anode die positive Elektrode aus Interkalationsmaterial und die Kathode die negative Elektrode, an der sich beim Laden Metall abscheidet oder sich eine Legierung bildet. Da im folgenden vornehmlich der Ladevorgang betrachtet wird, ist also die positive Elektrode die Anode und die negative Elektrode die Kathode.

Die Speicherung elektrischer Energie durch Abscheiden eines leichten Elements (z.B. Lithium) oder die Bildung spezifisch leichter Legierungen (z.B. LiAl) bringt hohe gravimetrische Energiedichten der negativen Elektrode mit sich. Allerdings bedingt dies große Volumenänderungen der negativen Elektrode beim Laden bzw. Entladen.

Die Volumenarbeit auf Seiten der Kathode und somit der mechanische Druck auf einen in der Regel zwischen Anode und Kathode angeordneten Separator und auf das Batteriegehäuse kommt durch die Abscheidung des Metalls oder durch die Bildung von Legierungen mit dem Metall der Elektrode des Stromkollektors zustande. Dies geschieht bevorzugt an den Rändern der Elektrode, da hier die höchste Stromdichte herrscht.

Das sich abscheidende Metall kann sich bevorzugt in Form feiner Nadeln (Dendriten bzw. Whisker) abscheiden und dadurch eine schwammige Morphologie annehmen. Dies hat zur Folge, daß der reale Raumbedarf ein Vielfaches gegenüber dem theoretischen beträgt. Die dendritische Abscheidung an der negativen Elektrode (Kathode) kann zum Kurzschluß führen, sobald diese den zwischen den Elektroden angeordneten Separator um- oder durchwächst oder der Separator der mechanischen Belastung nicht mehr standhält.

Auf Seiten der positiven Elektrode (Anode) kommt es bei der Verwendung von Interkalationsmaterialien bei der Auslagerung (Deinterkalation) der Metallionen zu einer Lockerung des Verbunds der Ionen im Wirtsgitter, was in der Regel ebenfalls zu einer Volumenerhöhung führt.

Üblicherweise werden Einheiten von positiver Elektrode/Separator/negativer Elektrode hergestellt und je nach Anforderungen an die Batterie kombiniert. Für prismatische Zellen werden mehrere Einheiten übereinander gestapelt und die Stromableiter von Anoden und Kathoden jeweils verbunden; für Rundzellen wird eine längere Einheit aufgewickelt. Diese Pakete oder Stapel werden dann in einem Gehäuse angeordnet, in dem das Paket recht stramm sitzen sollte, um ein Verrutschen der Elektroden zueinander und dadurch drohenden Kurzschluß zu verhindern. Bei der Befüllung mit dem Elektrolyten wird durch das Eindringen des Elektrolyten in die Poren der Batteriekomponenten, wobei diese gegebenenfalls quellen, ein hoher Druck verursacht, so daß die positive Elektrode eng an dem Separator und dieser wiederum eng an der negativen Elektrode anliegt.

Bei herkömmlichen Systemen ohne nennenswerte Volumenänderung während der elektrochemischen Aktivität ist dies ein gewünschter Effekt. Bei den betroffenen Systemen, bei denen eine große Volumenänderung auftritt, kann eine derartige Bauweise jedoch zum Kurzschluß führen. Dies ist einerseits dann der Fall, wenn der Separator der mechanischen Belastung nicht standhält und reißt, andererseits wenn der Separator von dem sich z. B. in Form von Dendriten bzw. Whisker abscheidenden Metall oder der gebildeten Legierung auf Seiten der Kathode durchwachsen wird und/oder das sich abscheidende Metall bzw. die gebildete Legierung auf Seiten der Anode von der Elektrodenkante den Separator bis hin zur Kathode umwächst. In jedem Fall kann eine solche Volumenänderung zu einer Deformierung des Batteriegehäuses führen.

Die EP 0 766 326 A1 beschreibt eine gattungsgemäße Elektrodeneinheit mit einer auf die Elektrodenoberfläche aufgebrachten, durch Glühen gebildeten keramischen oder glasartigen Substanz, die eine durchgängige, feinporöse Separatorschicht bildet. Nachteilig ist, daß beim Aufladen einer mit solchen Elektroden bestückten Akkumulatorzelle die an der negativen Elektrode abgeschiedene Masse den porösen Separator durchwachsen kann, was zum Kurzschluß führt. Ferner geht die Abscheidung der Masse während des Aufladens der Akkumulatorzelle mit einer erheblichen Volumenzunahme der Elektrode einher, so daß bei einer derart ausgebildeten Elektrodeneinheit die Gefahr eines Versagens des Separators und/oder einer Deformierung des Akkumulatorgehäuses besteht.

Der Erfindung liegt daher die Aufgabe zugrunde, eine Elektrodeneinheit der eingangs genannten Art dahingehend weiterzubilden, daß der durch Volumenänderung der Elektroden entstehende mechanische Druck aufgenommen und Kurzschlüsse zuverlässig vermieden werden.

Zur Lösung dieser Aufgabe sieht die Erfindung eine Elektrodeneinheit der eingangs genannten Art mit einer beim Ladevorgang eine Volumenzunahme durch Metallabscheidung oder Legierungsbildung aufweisenden Elektrode mit einem diese im wesentlichen vollständig umgebenden porösen Separator und einem wenigstens eine Fläche der Elektrode teilweise bedeckenden, die Volumenzunahme aufnehmende Zwischenräume aufweisenden elektrisch isolierenden Abstandhalter vor.

Durch die Erfindung wird erreicht, daß der die Elektrodenfläche teilweise bedeckende elektrisch isolierende Abstandhalter dem insbesondere beim Aufladen der Akkumulatorzelle auf der Kathode abgeschiedenen Metall bzw. der abgeschiedenen Legierung aber auch der Volumenzunahme bei der Deinterkalation an der positiven Elektrode den erforderlichen Raum zur Verfügung stellt und den sonst durch bei den elektrochemischen Reaktionen des Batteriesystems auftretende Volumenänderungen verursachten mechanischen Druck vermeidet. Der erfindungsgemäße Abstandhalter verhindert so, daß es durch zu starke mechanische Belastung der zwischen den Elektroden angeordneten Separatoren zu Kurzschlüssen kommt. Hierbei kann es in vielen Fällen ausreichend sein, lediglich insbesondere die negativen Elektroden einer wiederaufladbaren elektrochemischen Zelle mit einem solchen Abstandhalter auszustatten.

In bevorzugter Ausführung ist der Abstandhalter derart ausgebildet, daß dem abzuscheidenden Metall bzw. der gebildeten Legierung gerade so viel Platz auf der Elektrodenfläche zur Verfügung gestellt wird, daß sich durch den Ladevorgang eventuell anfallende schwammige Strukturen verdichten und nach beendetem Ladevorgang eine kompakte Abscheidung vorliegt. Ein solcher Abstandhalter ist insbesondere als Gewebe, Gewirke, Gitter, Netz, Lochfolie oder dergleichen ausgebildet, oder der Abstandhalter weist Noppen auf oder ist von schwamm- oder schaumartiger Struktur. Auf diese Weise wird das abgeschiedene Metall bzw. die abgeschiedene Legierung in der Wachstumsrichtung streng kanalisiert. Da der Abstandhalter aus einem elektrisch isolierenden Material besteht, scheidet sich das Metall lediglich auf der nicht vom Abstandhalter bedeckten Elektrodenfläche und dort insbesondere in kompakter Form ab.

Der Abstandhalter bedeckt vorzugsweise zwischen 5% und 30% wenigstens einer Fläche der Elektrode.

In bevorzugter Ausführung ist vorgesehen, daß der Abstandhalter die Außenkanten der Elektrode abdeckt und elektrisch isoliert, wobei der Abstandhalter beispielsweise einen die Außenkanten der Elektrode abdeckenden, elektrisch isolierenden Rahmen aufweist. Auf diese Weise werden bei einer Volumenänderung durch Metallabscheidung bzw. Legierungsbildung an der Elektrode deren Ränder durch das isolierende Material des Rahmens abgedeckt. Da bekanntlich die Feldliniendichte an den Kanten und Ecken eines in einem elektrischen Feld angeordneten metallischen Trägers erhöht ist, werden das Metall bzw. die Legierung beim Laden der Akkumulatorzelle vornehmlich an den Kanten und Ecken der Elektrode abgeschieden, was zu einer Ansammlung der Masse an diesen exponierten Stellen und zu einem erhöhten Druck auf den Separator an diesen Stellen führt. Ist der Separator etwas klein dimensioniert, kann das Wachstum der Dendriten oder Whisker um den Separator herum erfolgen. Dies führt unweigerlich zu einem Kurzschluß. Dem begegnet der die Kanten der Elektroden abdeckende Abstandhalter bzw. der Rahmen auf einfache und effektive Weise, so daß sich keine höheren Stromdichten am Elektrodenrand bilden und es nicht zu einer vermehrten Abscheidung bzw. Legierungsbildung kommen kann und somit keine erhöhte Kurzschlußgefahr besteht. Ist der Elektrodenrand durch die Geometrie des Abstandhalters nicht vollständig bedeckt, so kann zusätzlich ein solcher Rahmen, der die Elektrodenränder abdeckt, angeordnet sein.

Der Abstandhalter muß - wie auch der gegebenenfalls vorgesehene Rahmen - aus einem beliebigen elektrisch isolierenden Material, z. B. Kunststoff, Keramik, Glas oder dergleichen oder aus Verbunden solcher Materialien bestehen.

Um einen größtmöglichen Schutz vor Kurzschluß zu gewährleisten, ist insbesondere ein nach Art einer im wesentlichen vollständig geschlossenen Tasche ausgebildeter, poröser Separator vorgesehen, so daß die mit dem Abstandhalter versehene Elektrode in dem zur Tasche geformten und bevorzugt allseitig verschlossenen Separator untergebracht ist und ein Umwachsen des Separators und/oder des Abstandhalters durch abgeschiedenes Metall oder gebildete Legierung zuverlässig vermieden wird. Auf diese Weise ist die gesamte Elektrodenplatte mit dem diese teilweise bedeckenden Abstandhalter von dem isolierenden, porösen Separator bedeckt, so daß eine leitende Verbindung von Anode und Kathode durch an der Kathode beim Aufladen abgeschiedenes Metall nicht zustande kommen kann und ein Kurzschluß vermieden wird. In Verbindung mit dem erfindungsgemäßen Abstandhalter, welcher durch seine Struktur vorzugsweise eine lokalisierte und kompakte Abscheidung des Metalls gewährleistet, ist weiterhin sichergestellt, daß der Volumenänderung der Kathode beim Aufladen der elektrochemischen Zellen Rechnung getragen und somit die mechanische Belastung des Separators und des Batteriegehäuses minimiert wird. Mit der Bezeichnung "porös" ist insbesondere eine zur Durchlässigkeit des jeweiligen, in der elektrochemischen Zelle eingesetzten Elektrolyten geeignete Porosität gemeint.

Wie bereits erwähnt, ist der Einsatz eingetaschter Elektroden bei herkömmlichen Akkumulatorzellen zwar bekannt, doch beschränkt sich deren Funktion auf die Zurückhaltung von während der elektrochemischen Aktivität der Elektrode abfallender aktiver Masse. Derartige Elektroden finden vornehmlich bei Pb/PbO₂-Akkumulatoren Anwendung.

In bevorzugter Ausgestaltung besteht der Separator aus einer Folie oder Membran und kann der Separator insbesondere bei Verwendung plattenförmiger Elektroden zwei im wesentlichen deckungsgleiche, um den Umfang der Elektrode'miteinander durch Schweißen, Kleben oder dergleichen verbindbare Folien oder Membranen aufweisen. Letztere sind bevorzugt im wesentlichen um den gesamten Umfang der Elektrode durch Schweißen, Kleben oder dergleichen miteinander verbunden. In vielen Fällen kann es auch ausreichen, den Separator nach oben hin offen auszubilden, wobei Einprägungen vorgesehen sein können, um die bei den mit den Be- und Entladungsvorgängen einhergehenden chemischen Reaktionen gegebenenfalls entstehenden Gase aus dem Separator auszuleiten. Die randständigen Elektroden der elektrochemischen Zelle können ferner auch nur auf der der benachbarten Elektrode zugewandten Seite mit einem Separator versehen sein, während an der der Wandung der elektrochemischen Zelle zugewandten Seite beispielsweise eine isolierende Folie, z. B. aus einem thermoplastischen Kunststoff, wie Polypropylen, vorgesehen sein kann.

Als Materialien für den Separator kommen insbesondere mit dem verwendeten Elektrolyten benetzbare Kunststoffe, bevorzugt thermoplastische bzw. schweißbare Kunststoffe, wie Polyolefine (Polyethylen, Polypropylen etc.) in Frage. Der Separator kann aber auch aus keramisch beschichteten Trägermaterialien, Keramiken oder Verbunden der genannten Stoffe bestehen.

Der Abstandhalter kann im wesentlichen lose zwischen der Elektrode und dem Separator eingelegt, er kann aber auch durch Schweißen, Kleben, Beschichten oder dergleichen fest mit der Elektrode und/oder dem Separator verbunden sein.

Es bleibt vorbehalten, Elektrode und Abstandhalter einstückig bzw. die Elektrode selbst als Abstandhalter auszubilden. Dabei kann die Funktion des Abstandhalters durch zumindest außenseitig an der Elektrode angeordnete noppen-, gitter-, netz-, wabenartige, gewellte oder ähnliche Strukturen erreicht werden. Alternativ oder zusätzlich sind schwamm- oder schaumartige Strukturen möglich. Die Erhöhungen solcher Strukturen übernehmen dann die Funktion des Abstandhalters. In diesem Fall müssen die Erhöhungen der den Abstandhalter bildenden Oberflächenstruktur der Elektrode mit einer elektrisch isolierenden Beschichtung, z. B. mit einer keramischen Schicht oder einer Kunststoffschicht, versehen sein, um eine bevorzugte Abscheidung des Metalls bzw. der gebildeten Legierung an diesen Stellen und damit eine erhöhte mechanische Belastung des Separators zu vermeiden.

Alternativ oder zusätzlich können Separator und Abstandhalter einstückig ausgebildet bzw. der Separator selbst als Abstandhalter ausgebildet sein. In diesem Fall weist der Separator zumindest auf seiner der Elektrode zugewandten Seite eine den Abstandhalter bildende noppen-, gitter-, netz-, wabenartige oder ähnliche Struktur oder auch eine schwamm- oder schaumartige Struktur auf.

Nachstehend ist die Erfindung anhand beispielhafter Ausführungsformen unter Bezugnahme auf die Zeichnungen im einzelnen erläutert. Dabei zeigen:
- Fig. 1a, 2a, 3a:: jeweils eine Draufsicht auf eine Ausführungsform einer erfindungsgemäßen Elektrodeneinheit bei verschiedenen Herstellungsstufen;
- Fig. 1b, 2b, 3b:: jeweils einen Querschnitt A-A einer Elektrodeneinheit gemäß Fig. 1a, 2a, 3a;
- Fig. 4:: eine Draufsicht auf eine Ausführungsform einer erfindungsgemäßen Elektrodeneinheit mit einem Abstandhalter in Form eines Gewebes;
- Fig. 5.: eine Draufsicht auf eine Ausführungsform einer erfindungsgemäßen Elektrodeneinheit mit einem Abstandhalter in Form von Noppen;
- Fig. 6:: eine Draufsicht auf eine Ausführungsform einer erfindungsgemäßen Elektrodeneinheit mit einem Abstandhalter in Form eines Gitters;
- Fig. 7:: eine Seitensicht einer einstückig ausgebildeten Elektrode mit Abstandhalter und
- Fig. 8:: eine Seitenansicht eines einstückig ausgebildeten Separators mit Abstandhalter.

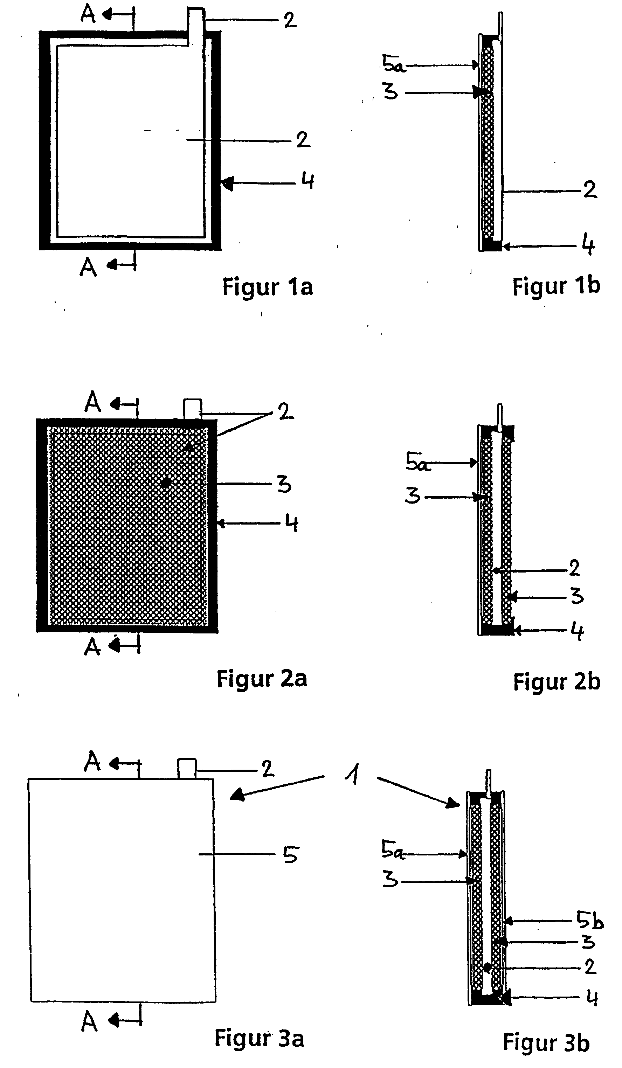

In Fig. 1a, 1b ist eine halbfertige Elektrodeneinheit mit einer plattenförmigen Elektrode 2 für wiederaufladbare elektrochemische Zellen, die ihre Energiespeichereigenschaften aus der Abscheidung eines Elements als Metall oder Legierung beziehen, dargestellt. In der gezeigten Montagesituation ist die Elektrode 2 auf einen (von dieser verdeckten) auf die rückseitige Elektrodenfläche aufgebrachten Abstandhalter 3 mit einem die Außenkanten der Elektrode 2 abdeckenden, elektrisch isolierenden Rahmen 4 und der Abstandhalter 3 wiederum auf einen porösen Separator 5a von folienartiger Gestalt aufgelegt. Der Abstandhalter 3 weist in der gezeigten Ausführung eine schaumartige Struktur auf.

Bei den in Fig. 2a und 2b dargestellten Montagesituationen ist auf die vordere Fläche der Elektrode ein weiterer Abstandhalter 3 mit einem Rahmen 4 aufgebracht.

Bei der Montagesituation gemäß Fig. 3a und 3b ist auf den Abstandhalter 3 mit Rahmen 4 ein weiterer folienartiger Separator 5b aufgelegt, wobei die Separatoren 5a, 5b unter Bildung eines im wesentlichen als vollständig geschlossene Tasche ausgestalteten Separators 5 vorzugsweise um den gesamten Umfang der Fläche der Elektrode 2 miteinander verbunden, z. B. verschweißt sind. Auf diese Weise wird verhindert, daß der Separator 5 von Metallabscheidungen umwachsen wird und eine elektrisch leitende Verbindung zwischen Anode und Kathode und somit ein Kurzschluß zustande kommt.

Bei einer solchen Elektrodeneinheit 1 wird bei Verwendung der Elektrode 2 als Kathode beim Aufladen der Akkumulatorzelle das Metall auf der zur Verfügung stehenden, nicht vom Abstandhalter 3 bedeckten Fläche der Elektrode 2 in idealerweise kompakter Form abgeschieden, so daß einerseits beim Aufladen keine Volumenänderung des gesamten Elektrodenpaketes auftritt, andererseits Kurzschlüsse aufgrund hoher mechanischer Belastung des Separators 5 vermieden werden.

Der Abstandhalter 3 kann z. B. im wesentlichen lose zwischen der Elektrode 2 und dem Separator 5 angeordnet sein oder auch durch Kleben, Schweißen, Beschichten oder dergleichen fest mit der Elektrode 2 und/oder dem Separator 5 verbunden sein.

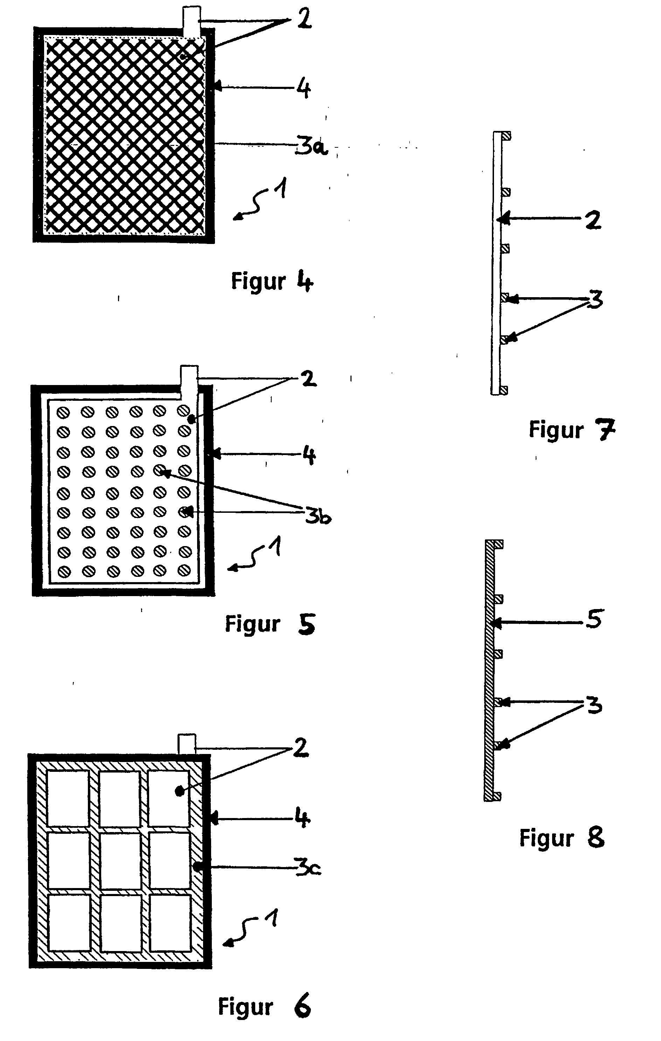

Während in Fig. 4 ein netzartiger Abstandhalter 3a mit einem Rahmen 4 dargestellt ist, ist der Abstandhalter 3b gemäß Fig. 5 von noppenartiger Struktur. Die Noppen können z. B. auf die Elektrode 2 aufgeklebt oder - falls der Abstandhalter 3 aus einem insbesondere thermoplastischen Kunststoff besteht - aufgeschweißt sein.

Fig. 6 zeigt einen gitterartigen Abstandhalter 3c mit einem Rahmen 4. Die Elektrodeneinheiten 1 gemäß Fig. 4 bis 6 können ebenfalls mit einem (nicht dargestellten) Separator gemäß Fig. 3a, 3b versehen sein.

In Fig. 7 ist eine plattenförmige Elektrode 2 mit einem z. B. noppenartigen Abstandhalter 3 dargestellt, wobei Elektrode 2 und Abstandhalter 3 einstückig ausgebildet sind bzw. die Elektrode 2 eine als Abstandhalter 3 wirkende Oberflächenstruktur aufweist. Die Noppen sind, z. B. mittels einer (nicht dargestellten) Beschichtung, elektrisch isoliert, so daß dort keine Metallabscheidung oder Legierungsbildung stattfindet.

Der Separator 5 gemäß Fig. 8. ist mit einem einstückig mit demselben ausgebildeten Abstandhalter 3 versehen, wobei der Separator 5 auf seiner der Elektrode zugewandten Seite z. B. eine den Abstandhalter 3 bildenden noppen-, gitter-, netz-, oder wabenartige Struktur aufweist.

## Patentansprüche

1. Elektrodeneinheit (1) für wiederaufladbare elektrochemische Zellen, die ihre Energiespeichereigenschaften aus der Abscheidung eines Elements als Metall oder Legierung beziehen, mit einer beim Ladevorgang eine Volumenzunahme durch Metallabscheidung oder Legierungsbildung aufweisenden Elektrode (2) einem diese im wesentlichen vollständig umgebenden porösen Separator (5) und einem wenigstens eine Fläche der Elektrode (2) teilweise bedeckenden, die Volumenzunahme aufnehmende Zwischenräume aufweisenden elektrisch isolierenden Abstandhalter (3).

2. Elektrodeneinheit nach Anspruch 1, **dadurch gekennzeichnet, daß** der Abstandhalter (3) als Gewebe, Gewirke, Gitter, Netz oder Lochfolie ausgebildet ist.

3. Elektrodeneinheit nach Anspruch 1, **dadurch gekennzeichnet, daß** der Abstandhalter (3) Noppen aufweist.

4. Elektrodeneinheit nach Anspruch 1, **dadurch gekennzeichnet, daß** der Abstandhalter (3) von schwamm- oder schaumartiger Struktur ist.

5. Elektrodeneinheit nach einem der Ansprüche 1 bis 4, **dadurch gekennzeichnet, daß** der Abstandhalter (3) zwischen 5% und 30% wenigstens einer Fläche der Elektrode (2) bedeckt.

6. Elektrodeneinheit nach einem der Ansprüche 1 bis 5, **dadurch gekennzeichnet, daß** der Abstandhalter (3) die Außenkanten der Elektrode (2) abdeckt und elektrisch isoliert.

7. Elektrodeneinheit nach Anspruch 6, **dadurch gekennzeichnet, daß** der Abstandhalter (3) einen die Außenkanten der Elektroden (2) abdeckenden, elektrisch isolierenden Rahmen (4) aufweist.

8. Elektrodeneinheit nach einem der Ansprüche 1 bis 7, **dadurch gekennzeichnet, daß** das Material des Abstandhalters (3) aus der Gruppe Kunststoff, Keramik, glasartige Materialien oder Verbunden solcher Materialien ausgewählt ist.

9. Elektrodeneinheit nach einem der Ansprüche 1 bis 8, **dadurch gekennzeichnet, daß** der Separator (5) nach Art einer im wesentlichen vollständig geschlossenen Tasche ausgebildet ist.

10. Elektrodeneinheit nach einem der Ansprüche 1 bis 9, **dadurch gekennzeichnet, daß** der Separator (5) aus einer Folie oder Membran besteht.

11. Elektrodeneinheit nach einem der Ansprüche 1 bis 10, **dadurch gekennzeichnet, daß** der Separator (5) zwei im wesentlichen deckungsgleiche, um den Umfang der Elektrode (2) miteinander durch Schweißen oder Kleben verbindbare Folien oder Membranen aufweist.

12. Elektrodeneinheit nach Anspruch 11, **dadurch gekennzeichnet, daß** die Folien oder Membranen im wesentlichen um den gesamten Umfang der Elektrode (2) durch Schweißen oder Kleben miteinander verbunden sind.

13. Elektrodeneinheit nach einem der Ansprüche 1 bis 12, **dadurch gekennzeichnet, daß** das Material des Separators (5) Kunststoff, insbesondere thermoplastischer Kunststoff, ist.

14. Elektrodeneinheit nach einem der Ansprüche 1 bis 12, **dadurch gekennzeichnet, daß** der Separator (5) aus einem keramisch beschichteten Trägermaterial besteht.

15. Elektrodeneinheit nach einem der Ansprüche 1 bis 12, **dadurch gekennzeichnet, daß** das Material des Separators (5) Keramik ist.

16. Elektrodeneinheit nach einem der Ansprüche 1 bis 15, **dadurch gekennzeichnet, daß** der Abstandhalter (3) im wesentlichen lose zwischen der Elektrode (2) und dem Separator (5) eingelegt ist.

17. Elektrodeneinheit nach einem der Ansprüche 1 bis 15, **dadurch gekennzeichnet, daß** der Abstandhalter (3) durch Schweißen, Kleben oder Beschichten fest mit der Elektrode (2) verbunden ist.

18. Elektrodeneinheit nach einem der Ansprüche 1 bis 15, **dadurch gekennzeichnet, daß** der Abstandhalter (3) durch Schweißen, Kleben oder Beschichten fest mit dem Separator (5) verbunden ist.

19. Elektrodeneinheit nach einem der Ansprüche 1 bis 15, **dadurch gekennzeichnet, daß** Elektrode (2) und Abstandhalter (3) einstückig ausgebildet sind.

20. Elektrodeneinheit nach Anspruch 19, **dadurch gekennzeichnet, daß** die Elektrode (2) zumindest außenseitig eine den Abstandhalter (3) bildende noppen-, gitter-, netz- oder wabenartige Struktur aufweist.

21. Elektrodeneinheit nach Anspruch 19, **dadurch gekennzeichnet, daß** die Elektrode (2) zumindest außenseitig eine den Abstandhalter (3) bildende schwamm- oder schaumartige Struktur aufweist.

22. Elektrodeneinheit nach einem der Ansprüche 19 bis 21, **dadurch gekennzeichnet, daß** die den Abstandhalter(3) bildende Oberflächenstruktur der Elektrode (2) mit einer elektrisch isolierenden Beschichtung versehen ist.

23. Elektrodeneinheit nach einem der Ansprüche 1 bis 15, **dadurch gekennzeichnet, daß** Separator (5) und Abstandhalter (3) einstückig ausgebildet sind.

24. Elektrodeneinheit nach Anspruch 23, **dadurch gekennzeichnet, daß** der Separator zumindest auf seiner der Elektrode (2) zugewandten Seite eine den Abstandhalter (3) bildende noppen-, gitter-, netz-, oder wabenartige Struktur aufweist.

25. Elektrodeneinheit nach Anspruch 23, **dadurch gekennzeichnet, daß** der Separator (5) zumindest auf seiner der Elektrode (2) zugewandten Seite eine schwamm- oder schaumartige Struktur aufweist.

26. Wiederaufladbare elektrochemische Zelle, die ihre Energiespeichereigenschaften aus der Abscheidung eines Elements als Metall oder Legierung beziehen, mit mindestens einer Elektrodeneinheit und einem der Ansprüche 1 bis 25.

## Claims

1. Electrode unit (1) for rechargeable electrochemical cells, which derive their energy storage properties from the deposition of an element as metal or alloy, having an electrode (2) which has a volume increase due to metal deposition or alloy formation during the charging process, a p orous s eparator (5) which essentially completely surrounds said electrode, and an electrically insulating distance piece (3) which partially covers at least one face of the electrode (2) and has intermediate spaces which accommodate the volume increase.

2. Electrode unit according to claim 1, **characterised in that** the distance piece (3) is configured as a woven fabric, knitted fabric, mesh, net or perforated film.

3. Electrode unit according to claim 1, **characterised in that** the distance piece (3) has knobs.

4. Electrode unit according to claim 1, **characterised in that** the distance piece (3) is of a sponge- or foam-like structure.

5. Electrode unit according to one of the claims 1 to 4, **characterised in that** the distance piece (3) covers between 5% and 30% at least of one face of the electrode (2).

6. Electrode unit according to one of the claims 1 to 5, **characterised in that** the distance piece (3) covers and electrically insulates the external edges of the electrode (2).

7. Electrode unit according to claim 6, **characterised in that** the distance piece (3) has an electrically insulating frame (4) which covers the external edges of the electrodes (2).

8. Electrode unit according to one of the claims 1 to 7, **characterised in that** the material of the distance piece (3) is selected from the group plastic material, ceramic, glass-like materials or composites of such materials.

9. Electrode unit according to one of the claims 1 to 8, **characterised in that** the separator (5) is configured in the manner of an essentially completely closed bag.

10. Electrode unit according to one of the claims 1 to 9, **characterised in that** the separator (5) comprises a film or membrane.

11. Electrode unit according to one of the claims 1 to 10, **characterised in that** the separator (5) has two essentially congruent films or membranes which can be connected to each other around the circumference of the electrode (2) by means of welding or gluing.

12. Electrode unit according to claim 11, **characterised in that** the films or membranes are connected to each other essentially around the entire circumference of the electrode (2) by means of welding or gluing.

13. Electrode unit according to one of the claims 1 to 12, **characterised in that** the material of the separator (5) is plastic material, in particular thermoplastic plastic material.

14. Electrode unit according to one of the claims 1 to 12, **characterised in that** the separator (5) comprises a ceramically coated carrier material.

15. Electrode unit according to one of the claims 1 to 12, **characterised in that** the material of the separator (5) is ceramic.

16. Electrode unit according to one of the claims 1 to 15, **characterised in that** the distance piece (3) is inserted essentially loosely between the electrode (2) and the separator (5).

17. Electrode unit according to one of the claims 1 to 15, **characterised in that** the distance piece (3) is connected securely to the electrode (2) by means of welding, gluing or coating.

18. Electrode unit according to one of the claims 1 to 15, **characterised in that** the distance piece (3) is connected securely to the separator (5) by means of welding, gluing or coating.

19. Electrode unit according to one of the claims 1 to 15, **characterised in that** electrode (2) and distance piece (3) are configured in one piece.

20. Electrode unit according to claim 19, **characterised in that** the electrode (2) has, at least on the external side, a knob-, mesh-, net- or honeycomb-like structure which forms the distance piece (3).

21. Electrode unit according to claim 19, **characterised in that** the electrode (2) has, at least on the external side, a sponge or foam-like structure which forms the distance piece (3).

22. Electrode unit according to one ofthe claims 19 to 21, **characterised in that** the surface structure of the electrode (2) which forms the distance piece (3) is provided with an electrically insulating coating.

23. Electrode unit according to one of the claims 1 to 15, **characterised in that** separator (5) and distance piece (3) are configured in one piece.

24. Electrode unit according to claim 23, **characterised in that** the separator has, at least on its side which is orientated towards the electrode (2), a knob-, mesh-, net- or honeycomb-like structure which forms the distance piece (3).

25. Electrode unit according to claim 23, **characterised in that** the separator (5) has, at least on its si de which is orientated towards the electrode (2), a sponge- or foam-like structure.

26. Rechargeable electrochemical cells, which derive their energy storage properties from the deposition of an element as metal or alloy, having at least one electrode unit and according to one of the claims 1 to 25.

## Revendications

1. Dispositif d'électrode (1) pour des cellules électrochimiques rechargeables tirant leurs caractéristiques d'accumulation d'énergie du dépôt d'un élément comme métal ou alliage, comportant
- une électrode qui subit, lors de l'opération de charge, une augmentation de volume par dépôt de métal ou formation d'alliage,
- un séparateur (5) poreux, entourant pratiquement complètement l'électrode et
- au moins un organe d'écartement (3) isolant électrique, couvrant au moins partiellement une face de l'électrode (2) et muni d'espaces intermédiaires pour recevoir l'augmentation de volume.

2. Dispositif d'électrode selon la revendication 1,
**caractérisé en ce que**
l'organe d'écartement (3) est réalisé comme tissu, tricot, grille, filet ou feuille perforée.

3. Dispositif d'électrode selon la revendication 1,
**caractérisé en ce que**
l'organe d'écartement (3) comporte des petites bosses.

4. Dispositif d'électrode selon la revendication 1,
**caractérisé en ce que**
l'organe d'écartement (3) a une structure de mousse ou d'éponge.

5. Dispositif d'électrode selon l'une des revendications 1 à 4,
**caractérisé en ce que**
l'organe d'écartement (3) couvre entre 5 % et 30 % d'au moins une face de l'électrode (2).

6. Dispositif d'électrode selon l'une des revendications 1 à 5,
caraetérisé en ce que
l'organe d'écartement (3) couvre les bords extérieurs de l'électrode (2) et les isole électriquement.

7. Dispositif d'électrode selon la revendication 6,
**caractérisé en ce que**
l'organe d'écartement (3) comporte un cadre (4) isolant électrique, couvrant les bords extérieurs de l'électrode (2).

8. Dispositif d'électrode selon l'une des revendications 1 à 7,
**caractérisé en ce que**
la matière de l'organe d'écartement (3) est choisie dans le groupe formé par les matières plastiques, la céramique, les matières vitreuses ou des combinaisons de ces matières.

9. Dispositif d'électrode selon l'une des revendications 1 à 8,
**caractérisé en ce que**
le séparateur (5) est réalisé sous la forme d'une poche en principe complètement fermée.

10. Dispositif d'électrode selon l'une des revendications 1 à 9,
**caractérisé en ce que**
le séparateur (5) est formé d'un film ou d'une membrane.

11. Dispositif d'électrode selon l'une des revendications 1 à 10,
**caractérisé en ce que**
le séparateur (5) comporte deux films ou membranes essentiellement superposables, reliées l'une à l'autre par soudage ou collage autour de la périphérie de l'électrode (2).

12. Dispositif d'électrode selon la revendication 11,
**caractérisé en ce que**
les films ou membranes sont reliées l'une à l'autre, essentiellement autour de toute la périphérie de l'électrode (2), par soudage ou collage.

13. Dispositif d'électrode selon l'une des revendications 1 à 12,
**caractérisé en ce que**
la matière du séparateur (5) est une matière plastique, notamment une matière thermoplastique.

14. Dispositif d'électrode selon l'une des revendications 1 à 12,
**caractérisé en ce que**
le séparateur (5) est en une matière de support revêtue de céramique.

15. Dispositif d'électrode selon l'une des revendications 1 à 12,
**caractérisé en ce que**
la matière du séparateur (5) est de la céramique.

16. Dispositif d'électrode selon l'une des revendications 1 à 15,
**caractérisé en ce que**
l'organe d'écartement (3) est placé d'une manière en principe libre entre l'électrode (2) et le séparateur (5).

17. Dispositif d'électrode selon l'une des revendications 1 à 15,
**caractérisé en ce que**
l'organe d'écartement (3) est relié solidairement à l'électrode (2) par soudage, collage ou revêtement.

18. Dispositif d'électrode selon l'une des revendications 1 à 15,
**caractérisé en ce que**
l'organe d'écartement (3) est relié solidairement au séparateur par soudage, collage ou revêtement.

19. Dispositif d'électrode selon l'une des revendications 1 à 15,
**caractérisé en ce que**
l'électrode (2) et l'organe d'écartement (3) sont réalisés en une seule pièce.

20. Dispositif d'électrode selon la revendication 19,
**caractérisé en ce que**
l'électrode (2) comporte, au moins du côté extérieur, une structure formant l'organe d'écartement (3), cette structure étant composée de petites bosses, d'une grille, d'un filet ou de nids d'abeille.

21. Dispositif d'électrode selon la revendication 19,
**caractérisé en ce que**
l'électrode (2) comporte, au moins du côté extérieur, une structure en forme d'éponge ou de mousse constituant l'organe d'écartement (3).

22. Dispositif d'électrode selon l'une des revendications 19 à 21,
**caractérisé en ce que**
la structure de surface de l'électrode (2) constituant l'organe d'écartement (3) est munie d'un revêtement d'isolation électrique.

23. Dispositif d'électrode selon l'une des revendications 1 à 15,
**caractérisé en ce que**
le séparateur (5) et l'organe d'écartement (3) sont réalisés en une seule pièce.

24. Dispositif d'électrode selon la revendication 23,
**caractérisé en ce que**
le séparateur comporte au moins sur sa face tournée vers l'électrode (2), une structure formant l'organe d'écartement (3), cette structure étant constituée de petites bosses, d'une grille, d'un filet ou de nids d'abeille.

25. Dispositif d'électrode selon la revendication 23,
**caractérisé en ce que**
le séparateur (5) présente au moins sur sa face tournée vers l'électrode (2), une structure en forme de mousse ou d'éponge.

26. Cellule électrochimique rechargeable tirant ses caractéristiques d'accumulation d'énergie du dépôt d'un élément tel que du métal ou un alliage, ayant au moins un dispositif d'électrode selon l'une des revendications 1 à 25.
